# EUROPEAN PATENT APPLICATION

(11) **EP 4 653 561 A1**
(43) Date of publication of application: **26.11.2025**
(21) Application number: 24744731.1
(22) Date of filing: 19.01.2024
(51) Int. Cl.: C22C 1/05, B22F 1/00, B22F 1/12, B22F 5/00, C22C 33/02, C22C 38/00

(54) **VALVE SEAT FORMED OF IRON-BASED SINTERED ALLOY FOR INTERNAL COMBUSTION ENGINES AND METHOD FOR PRODUCING SAME**

(30) Priority: 19.01.2023 JP 2023006755
(71) Applicant: Nippon Piston Ring Co., Ltd., Saitama-shi, Saitama 338-8503 (JP)
(72) Inventor: IKEMI, Satoshi, Shimotsuga-gun, Tochigi 329-0114 (JP); SATO, Katsuaki, Shimotsuga-gun, Tochigi 329-0114 (JP)
(74) Representative: Grünecker Patent- und Rechtsanwälte PartG mbB
(86) International application number: PCT/JP2024/001380
(87) International publication number: WO 2024/154811

(57) **Abstract**

Provided is a valve seat insert made of an iron-based sintered alloy excellent in wear resistance and radial crushing strength.

The valve seat insert is a sintered body made of an iron-based sintered alloy having a two-layer structure, the sintered body being obtained by sintering a valve contacting face material and a supporting material in an integrated manner. The valve contacting face material is a sintered body made of an iron-based sintered alloy, the sintered body having a structure in which 5.0 to 30.0% of a high-alloy phase, 10.0 to 40.0% of Si-Cr-Mo-Ni type Fe-based intermetallic compound particles having a hardness of 700 to 1300 HV, and 0 to 4.0% of solid lubricant particles are dispersed in a base matrix phase composed of a fine carbide precipitation phase, by area%, and a base matrix part having a composition containing, by mass%, C: 0.50 to 2.80%, Si: 1.80% or less, Mn: 2.50% or less, Cr: 2.00 to 7.00%, Mo: 3.00 to 25.00%, Ni: 2.00 to 8.00%, Co: 0 to 10.00%, V: 0.50 to 4.00%, W: 4.00 to 10.00%, and S: 0 to 2.00%, with the balance being Fe. As a result, a valve seat insert having excellent radial crushing strength and excellent wear resistance can be obtained.

## Description

### Technical Field

The present invention relates to a valve seat insert made of an iron-based sintered alloy for an internal combustion engine and a method for producing the same, and particularly to improvement in wear resistance and improvement in radial crushing strength of a valve seat insert for an internal combustion engine using a gas fuel such as LPG, CNG, or hydrogen and a special fuel such as ethanol-containing fuel.

### Background Art

A valve seat insert is usually press-fitted into a cylinder head of an internal combustion engine, and plays a role of cooling a valve and sealing a combustion gas. The valve seat insert is struck by the valve and exposed to wear due to sliding, heating due to the combustion gas, corrosion due to combustion products, and the like, conventionally, the valve seat insert has been required to have excellent heat resistance and wear resistance, and to have low opposite aggressiveness so as not to wear the valve as a counter member.

In response to such a demand, for example, Patent Literature 1 describes a "valve seat insert made of an iron-based sintered alloy for an internal combustion engine excellent in wear resistance". In the technique described in Patent Literature 1, the base matrix phase has a hard single phase structure which is a fine carbide precipitation phase having a hardness of 550 HV or more in which fine carbides of 10 µm or less are precipitated. The valve seat insert is a valve seat insert made of an iron-based sintered alloy having a structure in which hard particles having a hardness of 650 to 1200 HV are dispersed in the base matrix phase in an amount of 20 to 40% in terms of area ratio, and a diffusion phase is formed around the hard particles in an amount of 0.5 to 5% in terms of area ratio, or solid lubricant particles are further dispersed in an amount of 5% or less in terms of area ratio. As a result, even when a high face surface hardness valve is used in an internal combustion engine in an environment using a special fuel such as a gas fuel, which is a severe wear environment, wear of the valve seat insert is small, and a combination of the valve and the valve seat insert, which are excellent in wear resistance, can be realized.

Patent Literature 2 describes a valve seat insert made of an iron-based sintered alloy. The valve seat insert described in Patent Literature 2 is a valve seat insert having a two-layer structure in which a valve seating side portion and a head seating side portion are integrally sintered. The valve seating side portion has a porosity of 10 to 25% by volume and a sintered density of 6.1 to 7.1 g/cm³, and contains hard particles dispersed in a base matrix phase. The hard particles dispersed in the base matrix phase are particles composed of one or two or more elements selected from C, Cr, Mo, Co, Si, Ni, S, and Fe, and are dispersed in the base matrix phase in an amount of 5 to 40% in terms of area ratio. The composition of the base matrix part including the base matrix phase and hard particles is an iron-based sintered alloy material having a composition containing, by mass%, 10.0 to 40.0% in total of one or two or more selected from Ni: 2.0 to 23.0%, Cr: 0.4 to 15.0%, Mo: 3.0 to 15.0%, Cu: 0.2 to 3.0%, Co: 3.0 to 15.0%, V: 0.1 to 0.5%, Mn: 0.1 to 0.5%, W: 0.2 to 6.0%, C: 0.8 to 2.0%, Si: 0.1 to 1.0%, and S: 0.1 to 1.0% with the balance being Fe and unavoidable impurities. Patent Literature 2 exemplifies, as the above-described hard particles, Cr-Mo-Co type intermetallic compound particles, Ni-Cr-Mo-Co type intermetallic compound particles, Fe-Mo alloy particles, Fe-Ni-Mo-S type alloy particles, and Fe-Mo-Si type alloy particles.

Patent Literature 3 proposes a valve seat insert made of an iron-based sintered alloy. The valve seat insert made of an iron-based sintered alloy described in Patent Literature 3 is a valve seat insert made of an iron-based sintered alloy having hard particles dispersed in a base matrix phase, the valve seat insert having a composition containing as a whole, by mass%, Cr: 5.0 to 20.0%, Si: 0.4 to 2.0%, Ni: 2.0 to 6.0%, Mo: 5.0 to 25.0%, W: 0.1 to 5.0%, V: 0.5 to 5.0%, Nb: 1.0% or less, and C: 0.5 to 1.5% with the balance being Fe and unavoidable impurities. In the valve seat insert made of an iron-based sintered alloy described in Patent Literature 3, it is preferable to use, as hard particles, Fe-Mo-Si alloy particles containing, by mass%, Mo: 40.0 to 70.0%, Si: 0.4 to 2.0%, and C: 0.1% or less with the balance being Fe and unavoidable impurities.

Patent Literature 4 proposes an iron-based sintered alloy with dispersed hard particles. The iron-based sintered alloy with dispersed hard particles described in Patent Literature 4 is an iron-based sintered alloy with dispersed hard particles produced by dispersing and sintering 3 to 20% of hard particles based on the entire alloy in a base matrix containing, by wt%, Si: 0.4 to 2%, Ni: 2 to 12%, Mo: 3 to 12%, Cr: 0.5 to 5%, V: 0.6 to 4%, Nb: 0.1 to 3%, and C: 0.5 to 2% with the balance being Fe, the hard particles containing Mo: 60 to 70%, B: 0.3 to 1%, and C: 0.1% or less with the balance being Fe. When B is added to ferromolybdenum hard particles, B improves the wettability of the ferromolybdenum to prevent the hard particles from falling off the base matrix, and the adhesive property between the base matrix and the hard particles is improved, thereby improving the thermal strength and the mechanical strength of the sintered alloy.

### Citation List

### Patent Literature

Patent Literature 1: JP 6736227 B2
Patent Literature 2: JP 2004-232088 A
Patent Literature 3: JP 2015-178650 A
Patent Literature 4: JP 2005-325436 A

### Summary of Invention

### Technical Problem

In the valve seat inserts described in Patent Literatures 1 and 2, it is considered preferable that a large amount of Co is contained in the base matrix phase or the hard particles because it contributes to improvement in high-temperature strength and toughness of the base matrix phase and improvement in wear resistance.

However, in the valve seat inserts made of an iron-based sintered alloy described in Patent Literatures 1 and 2, there are problems, for example, in that the radial crushing strength is low, cracking easily occurs at the time of press-fitting into the cylinder head, the particles easily fall off at the time of contact with the valve, and the wear resistance is reduced. In the valve seat inserts made of an iron-based sintered alloy described in Patent Literatures 1 and 2, there is also a problem in that the Young's modulus is low, deformation easily occurs, sealability is deteriorated, and the combustion gas leaks.

In the techniques described in Patent Literatures 3 and 4, since the dispersed iron-based hard particles do not contain Co, cracking and chipping are more likely to occur than conventional Co-based hard particles. Therefore, the present inventors have found that there is a problem in that the hard particles fall off from the base matrix phase, and particularly, desired wear resistance cannot be secured in a severe valve seat insert use environment in recent years.

An object of the present invention is to provide a valve seat insert made of an iron-based sintered alloy for an internal combustion engine excellent in wear resistance and also excellent in radial crushing strength even in a severe valve seat insert use environment in recent years. The expression "excellent in radial crushing strength" as described herein refers to a case where the radial crushing strength obtained in accordance with the provision of JIS Z 2507 is 490 MPa or more.

### Solution to Problem

In order to achieve the above object, the present inventors first conducted intensive studies on various factors affecting the radial crushing strength. As a result, it was found that a low "radial crushing strength" is caused by the low compressibility of the iron-based powder used. In this case, in the iron-based powder used, the carbide is already precipitated in the powder, the hardness of the powder particles increases, and the plastic deformation (compression) of the powder particles becomes insufficient during the powder compacting. For this reason, it was considered that the element diffusion during the sintering treatment was hardly promoted, and as a result, the interparticle bonding force was reduced. Therefore, in the present invention, it has been conceived to use an iron-based powder having a low carbon amount as an iron-based powder for base matrix phase formation so that sufficient powder compacting can be performed during powder compacting and sufficient plastic deformation can be added to powder particles. However, when the carbon amount of the iron-based powder is excessively reduced, the amount of carbide decreases, and the wear resistance of the sintered body decreases. Therefore, an iron-based powder in which the blending amount of the graphite powder is increased so that the carbon amount of the sintered body does not decrease, and the amount of the carbide forming element is increased to increase the amount of carbide is used. From this, it has been found that the precipitation amount of fine carbides in the sintered body is significantly increased as compared with the conventional case, and the wear resistance and the radial crushing strength are significantly improved.

In the present invention, it has been found that the progress of sintering is remarkably promoted, the wear resistance is not deteriorated, and the radial crushing strength is improved by containing an appropriate amount of Ni or further Co in the base matrix.

The present invention has been completed by further conducting studies based on such findings. That is, the gist of the present invention is as follows.
[1] A valve seat insert made of an iron-based sintered alloy for an internal combustion engine, the valve seat insert being press-fitted into a cylinder head of an internal combustion engine, the valve seat insert including a single-layer structure including a valve contacting face material, wherein
   the valve contacting face material has a base matrix phase composed of a fine carbide precipitation phase, and a structure in which 5.0 to 30.0% of a high-alloy phase, 10.0 to 40.0% of hard particles, and 0 to 4.0% of solid lubricant particles are dispersed in the base matrix phase in terms of area ratio,
   the hard particles are Si-Cr-Mo-Ni type Fe-based intermetallic compound particles having a hardness of 700 to 1300 HV in Vickers hardness and having a composition containing, by mass%, Si: 1.5 to 3.5%, Cr: 7.0 to 9.0%, Mo: 35.0 to 45.0%, and Ni: 5.0 to 20.0% with the balance being Fe and unavoidable impurities,
   a base matrix part including the base matrix phase, the high-alloy phase, the hard particles, and the solid lubricant particles is made of an iron-based sintered alloy material having a base matrix part composition containing, by mass%, C: 0.50 to 2.80% and further containing one or two or more selected from Si: 1.80% or less, Mn: 2.50% or less, Cr: 2.00 to 7.00%, Mo: 3.00 to 25.00%, Ni: 2.00 to 8.00%, Co: 0 to 10.00%, V: 0.50 to 4.00%, and W: 4.00 to 10.00%, and S: 0 to 2.00% with the balance being Fe and unavoidable impurities, and
   a density of the valve seat insert is 6.6 to 7.4 g/cm³.
[2] A valve seat insert made of an iron-based sintered alloy for an internal combustion engine, the valve seat insert being press-fitted into a cylinder head of an internal combustion engine, the valve seat insert including a two-layer structure in which a valve contacting face material and a supporting material are integrally sintered, wherein
   the valve contacting face material has a base matrix phase composed of a fine carbide precipitation phase, and a structure in which 5.0 to 30.0% of a high-alloy phase, 10.0 to 40.0% of hard particles, and 0 to 4.0% of solid lubricant particles are dispersed in the base matrix phase in terms of area ratio,
   the hard particles dispersed in the valve contacting face material are Si-Cr-Mo-Ni type Fe-based intermetallic compound particles having a hardness of 700 to 1300 HV in Vickers hardness and having a composition containing, by mass%, Si: 1.5 to 3.5%, Cr: 7.0 to 9.0%, Mo: 35.0 to 45.0%, and Ni: 5.0 to 20.0% with the balance being Fe and unavoidable impurities,
   a base matrix part including the base matrix phase, the high-alloy phase, the hard particles, and the solid lubricant particles is made of an iron-based sintered alloy material having a base matrix part composition containing, by mass%, C: 0.50 to 2.80% and further containing one or two or more selected from Si: 1.80% or less, Mn: 2.50% or less, Cr: 2.00 to 7.00%, Mo: 3.00 to 25.00%, Ni: 2.00 to 8.00%, Co: 0 to 10.00%, V: 0.50 to 4.00%, and W: 4.00 to 10.00%, and S: 0 to 2.00% with the balance being Fe and unavoidable impurities,
   the supporting material is made of an iron-based sintered alloy material having a base matrix phase, a structure in which 0 to 4.0% of solid lubricant particles in terms of area ratio and 0 to 5.0% of hardness improving particles in terms of area ratio are dispersed in the base matrix phase, and a composition in which a base matrix part including the base matrix phase, the solid lubricant particles, and the hardness improving particles contains, by mass%, C: 0.30 to 2.00%, and further contains Ni: 0 to 2.00%, Mo: 0 to 2.00%, Cu: 0 to 5.00%, Mn: 0 to 5.00%, and S: 0 to 2.00% with the balance being Fe and unavoidable impurities, and
   a density of the valve seat insert is 6.7 to 7.4 g/cm³.
[3] The valve seat insert made of an iron-based sintered alloy for an internal combustion engine described in [1] or [2], wherein the fine carbide precipitation phase is a phase in which a fine carbide having a particle size of 10 µm or less is precipitated and which has a hardness of 450 to 650 HV in Vickers hardness.
[4] The valve seat insert made of an iron-based sintered alloy for an internal combustion engine described in any one of [1] to [3], wherein the solid lubricant particles are one or two selected from manganese sulfide MnS and molybdenum disulfide MoS₂.
[5] The valve seat insert made of an iron-based sintered alloy described in any one of [2] to [4], wherein the hardness improving particles are iron-molybdenum alloy particles.
[6] The valve seat insert made of an iron-based sintered alloy for an internal combustion engine described in any one of [1] to [5], wherein pores of the iron-based sintered alloy material are impregnated with a thermosetting resin or an anaerobic resin.
[7] A method for producing the valve seat insert made of an iron-based sintered alloy with a single-layer structure described in [1], the method including:
   in production of a valve seat insert having a predetermined shape by blending, mixing, and kneading predetermined amounts of an iron-based powder, a graphite powder, an alloy element powder, and a hard particle powder, or further a solid lubricant powder to form a mixed powder,
   filling a die having a predetermined shape with the mixed powder and performing press working to form a green compact, and
   subjecting the green compact to a sintering treatment in a reducing atmosphere to obtain a sintered body and then subjecting the sintered body to cutting machining or further grinding,
   blending 40.0 to 70.0% of the iron-based powder with respect to the total amount of the mixed powder by mass%, the iron-based powder being an iron-based powder having a composition containing, by mass%, C: 0.2 to 0.8%, Si: 1.0% or less, Mn: 1.0% or less, Cr: 7.0% or less, Mo: 7.0% or less, V: 5.0% or less, W: 12% or less, or further contains Co: 12.0% or less with the balance being Fe and unavoidable impurities, and having a particle hardness of 170 to 280 HV in Vickers hardness;
   blending 10.0 to 40.0% of the hard particle powder with respect to the total amount of the mixed powder by mass%, the hard particle powder being a Si-Cr-Mo-Ni type Fe-based intermetallic compound particle powder having a hardness of 700 to 1300 HV in Vickers hardness and having a composition containing, by mass%, Si: 1.5 to 3.5%, Cr: 7.0 to 9.0%, Mo: 35.0 to 45.0%, Ni: 5.0 to 20.0% with the balance being Fe and unavoidable impurities;
   blending 0.5 to 2.0% of the graphite powder with respect to the total amount of the mixed powder by mass%;
   blending 0 to 7.0% of the alloy element powder with respect to the total amount of the mixed powder in total by mass%;
   further blending 0 to 4.0% of the solid lubricant powder with respect to the total amount of the mixed powder by mass%;
   performing the press working such that a density of the green compact is a density of 6.6 g/cm³ or more; and
   performing the sintering treatment at a sintering temperature of 1100 to 1200°C to obtain the sintered body.
[8] A method for producing the valve seat insert made of an iron-based sintered alloy with a two-layer structure described in [2], the method including:
   in production of a valve seat insert with a two-layer structure having a predetermined shape by blending, mixing, and kneading predetermined amounts of an iron-based powder, a graphite powder, an alloy element powder, and a hard particle powder, or further a solid lubricant powder to form a mixed powder for a valve contacting face material,
   blending, mixing, and kneading predetermined amounts of an iron-based powder and a graphite powder, or further an alloy element powder, a hardness improving particle powder, a solid lubricant particle powder to form a mixed powder for a supporting material, and
   filling a die having a predetermined shape with the mixed powder for a valve contacting face material and the mixed powder for a supporting material in this order, performing press working to form a green compact, then subjecting the green compact to a sintering treatment in a reducing atmosphere to form a sintered body with a two-layer structure in which a valve contacting face material and a supporting material are integrally sintered, and performing cutting machining or further grinding,
   blending, in the mixed powder for a valve contacting face material, 40.0 to 70.0% of the iron-based powder with respect to the total amount of the mixed powder by mass%, the iron-based powder being an iron-based powder having a composition containing, by mass%, C: 0.2 to 0.8%, Si: 1.0% or less, Mn: 1.0% or less, Cr: 7.0% or less, Mo: 7.0% or less, V: 5.0% or less, and W: 12.0% or less, or further contains Co: 12.0% or less with the balance being Fe and unavoidable impurities, and having a particle hardness of 170 to 280 HV in Vickers hardness;
   blending 10.0 to 40.0% of the hard particle powder with respect to the total amount of the mixed powder by mass%, the hard particle powder being a Si-Cr-Mo-Ni type Fe-based intermetallic compound particle powder having a hardness of 700 to 1300 HV in Vickers hardness and having a composition containing, by mass%, Si: 1.5 to 3.5%, Cr: 7.0 to 9.0%, Mo: 35.0 to 45.0%, and Ni: 5.0 to 20.0% with the balance being Fe and unavoidable impurities;
   blending 0.5 to 2.0% of the graphite powder with respect to the total amount of the mixed powder by mass%;
   blending 0 to 7.0% of the alloy element powder with respect to the total amount of the mixed powder in total by mass%, and further blending 0 to 4.0% of the solid lubricant particle powder with respect to the total amount of the mixed powder by mass%;
   blending, in the mixed powder for a supporting material, 0.5 to 2.0% of the graphite powder with respect to the total amount of the mixed powder for a supporting material by mass%, the iron-based powder being a pure iron powder;
   blending 0 to 5.0% of the alloy element powder with respect to the total amount of the mixed powder for a supporting material in total by mass%;
   blending 0 to 5.0% of the hardness improving particle powder with respect to the total amount of the mixed powder for a supporting material by mass%, the hardness improving particle powder being an Fe-Mo alloy powder;
   blending 0 to 4.0% of the solid lubricant particle powder with respect to the total amount of the mixed powder for a supporting material by mass%;
   performing the press working such that a density of the green compact is a density of 6.6 g/cm³ or more; and
   performing the sintering treatment at a sintering temperature of 1100 to 1200°C to obtain a sintered body with a two-layer structure in which the valve contacting face material and the supporting material are integrally sintered.
[9] The method for producing the valve seat insert made of an iron-based sintered alloy described in [7] or [8], wherein a resin impregnation treatment of impregnating with a thermosetting resin or an anaerobic resin is further performed after the sintering treatment.

### Advantageous Effects of Invention

According to the present invention, it is possible to produce a valve seat insert made of an iron-based sintered alloy for an internal combustion engine excellent in wear resistance and also excellent in radial crushing strength, and an industrially remarkable effect is obtained.

### Brief Description of Drawings

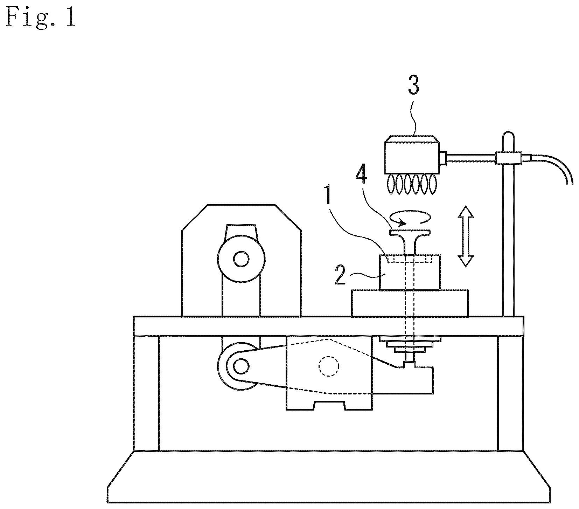

Fig. 1 is an explanatory diagram illustrating an outline of a single rig testing machine.

### Description of Embodiments

A valve seat insert of the present invention is a valve seat insert made of an iron-based sintered alloy with a single-layer structure including only a valve contacting face material, or a valve seat insert made of an iron-based sintered alloy with a two-layer structure in which a valve contacting face material and a supporting material are integrally sintered.

First, the valve contacting face material will be described.

The valve contacting face material has a base matrix phase composed of a fine carbide precipitation phase, and a structure in which 5.0 to 30.0% of a high-alloy phase, 10.0 to 40.0% of hard particles, and 0 to 4.0% of solid lubricant particles are dispersed in the base matrix phase in terms of area ratio with respect to the entire structure. The balance other than the high-alloy phase, the hard particles, and the solid lubricant particles are the base matrix phase and pores. The pores are preferably impregnated with a thermosetting resin or an anaerobic resin. By impregnating the pores with a thermosetting resin or an anaerobic resin and sealing the pores, cuttability and machinability are improved without lowering wear resistance, and improvement in corrosion resistance can be expected.

The pore can also be calculated from the true density and the density of the valve contacting face material.

The base matrix phase is a fine carbide precipitation phase.

The fine carbide precipitation phase is a phase in which a fine carbide having a particle size of 10 µm or less is precipitated, and is a hard phase having a hardness of 450 HV or more, preferably 650 HV or less in Vickers hardness. Due to the presence of such a hard fine carbide precipitation phase, the base matrix can be strengthened, and the wear resistance is further improved. When the particle size of the carbide precipitated in the base matrix phase increases to more than 10 µm, the hardness and toughness of the base matrix phase decrease, the opposite aggressiveness increases, and the radial crushing strength decreases.

The high-alloy phase dispersed in the base matrix phase is a region in which the alloy element is diffused from the hard particles or the additive element during sintering and the alloy amount is increased. The high-alloy phase particularly has an action of preventing the hard particles from falling off, and preferably has a hardness of 170 HV or more, preferably 280 HV or less, in Vickers hardness. The high-alloy phase is required to be contained in an amount of 5.0% or more in terms of area ratio with respect to the entire structure in order to obtain the above-described action. On the other hand, when the high-alloy phase is contained in an amount exceeding 30.0%, the strength of the valve seat insert decreases. Therefore, the high-alloy phase is in a range of 5.0 to 30.0% in terms of area ratio. The area ratio thereof is preferably 10.0 to 20.0%.

The hard particles are hard particles having a hardness of 700 to 1300 HV in Vickers hardness. When the hardness of the hard particles is less than 700 HV, the effect of improving wear resistance is small. On the other hand, when the hardness is increased to more than 1300 HV, machinability is deteriorated. Therefore, the hardness of the hard particles dispersed in the base matrix phase was limited to a range of 700 to 1300 HV in Vickers hardness.

The hard particles are preferably particles having the above-described hardness and an average particle size of 10 to 150 µm. When the average particle size of the hard particles is less than 10 µm, the hard particles are likely to be excessively diffused during sintering; on the other hand, when the average particle size thereof exceeds 150 µm, the bonding strength with the base matrix decreases, and the wear resistance decreases. Therefore, the average particle size of the hard particles dispersed in the base matrix phase is preferably limited to a range of 10 to 150 µm. The term "average particle size" as described herein means a particle size D50 at which a cumulated distribution measured by a laser diffraction method is 50%.

In the present invention, the hard particles having the above-described hardness are dispersed in the base matrix phase in an amount of 10.0 to 40.0% in terms of area ratio with respect to the entire structure. When the dispersion amount of the hard particles is less than 10.0%, desired wear resistance cannot be secured. On the other hand, when the dispersion amount of the hard particles exceeds 40.0%, the bonding strength with the base matrix phase decreases, and the wear resistance decreases. Therefore, the dispersion amount of the hard particles dispersed in the base matrix phase was limited to a range of 10.0 to 40.0% in terms of area ratio.

The hard particles are Si-Cr-Mo-Ni type Fe-based intermetallic compound particles having a composition containing, by mass%, Si: 1.5 to 3.5%, Cr: 7.0 to 9.0%, Mo: 35.0 to 45.0%, and Ni: 5.0 to 20.0% with the balance being Fe and unavoidable impurities. By using the Fe-based intermetallic compound particles as the hard particles, oxidation characteristics are remarkably improved.

In the valve contacting face material of the valve seat insert of the present invention, the solid lubricant particles may be further dispersed in the base matrix phase in an amount of 4.0% or less in terms of area ratio with respect to the entire structure. By dispersing the solid lubricant particles in the base matrix phase, machinability and lubricity are improved. However, when the solid lubricant particles are dispersed in an amount exceeding 4.0% in terms of area ratio, mechanical properties are significantly deteriorated. Therefore, the solid lubricant particles was limited to a range of 0 to 4.0% in terms of area ratio with respect to the entire structure. The solid lubricant particles are preferably one or two selected from manganese sulfide MnS and molybdenum disulfide MoS₂.

In the valve contacting face material of the valve seat insert of the present invention, the base matrix part including the base matrix phase, the high-alloy phase, the hard particles, and solid lubricant particles has a composition (base matrix part composition) containing, by mass%, C: 0.50 to 2.80% and further containing one or two or more selected from Si: 1.80% or less, Mn: 2.50% or less, Cr: 2.00 to 7.00%, Mo: 3.00 to 25.00%, Co: 0 to 10.00%, Ni: 2.00 to 8.00%, V: 0.50 to 4.00%, and W: 4.00 to 10.00%, and S: 0 to 2.00% with the balance being Fe and unavoidable impurities.

Next, the reason for limitation in the base matrix part composition of the valve contacting face material will be described. Hereinafter, mass% in the composition is simply expressed as %.

### C: 0.50 to 2.80%

C is an element necessary for adjusting base matrix phase to a predetermined hardness and structure or for forming a carbide, and is contained in an amount of 0.50% or more. On the other hand, when the content exceeds 2.80%, the melting point decreases, and a sintering treatment is liquid phase sintering. In the case of liquid phase sintering, the amount of precipitated carbide is excessively large, the number of pores is increased, and elongation characteristics and dimensional accuracy are deteriorated. Therefore, the content of C was limited to a range of 0.50 to 2.80%. The content of C is preferably 0.90 to 1.70%. When the pores are impregnated with a resin, the content of C is preferably 2.30 to 2.60%.

### Si: 1.80% or less

Si is an element mainly contained in the hard particles and constituting an intermetallic compound particles, and increases the hardness of the hard particles and also increases the base matrix strength to improve the wear resistance. For this purpose, Si is preferably contained in an amount of 0.20% or more. On the other hand, when Si is contained in an amount exceeding 1.80%, the opposite aggressiveness increases. For this reason, the content of Si was limited to 1.80% or less. The content thereof is preferably 0.50 to 1.00%.

### Mn: 2.50% or less

Mn is an element increasing the hardness of the base matrix phase, and a part of Mn is an element contained in the base matrix part due to the solid lubricant particles and contributing to improving machinability, and it is preferable that Mn is contained in an amount of 0.05% or more. On the other hand, when Mn is contained in an amount exceeding 2.50%, the base matrix phase hardness, toughness, and ductility are deteriorated. Therefore, the content of Mn was limited to 2.50% or less. The content thereof is preferably 0.20 to 1.60%.

### Cr: 2.00 to 7.00%

Cr is solid-solved in the base matrix phase and forms a carbide to increase the hardness of the base matrix phase, and Cr is an element contributing to an increase in hardness of the hard particles as a constituent element of the intermetallic compound particles, and is contained in an amount of 2.00% or more as a base matrix part. On the other hand, when Cr is contained in an amount exceeding 7.00%, the precipitation of Cr carbide in the base matrix phase is excessive, and it becomes difficult to form a carbide in the base matrix phase into a fine carbide. Therefore, the content of Cr was limited to a range of 2.00 to 7.00%. The content thereof is preferably 3.00 to 6.00%.

### Mo: 3.00 to 25.00%

Mo is solid-solved in the base matrix phase and precipitates as a carbide to increase the hardness of the base matrix phase, and Mo is an element contributing to an increase in hardness of the hard particles as a constituent element of the intermetallic compound particles, and is preferably contained in an amount of 3.00% or more as a base matrix part. On the other hand, when Mo is contained in an amount exceeding 25.00%, the density during powder molding is less likely to increase, and formability is deteriorated. Therefore, the content of Mo was limited to a range of 3.00 to 25.00%. The content thereof is preferably 7.00 to 23.00%.

### Co: 0 to 10.00%

Co is an element increasing the strength of the base matrix phase, particularly the high-temperature strength, further improving the toughness of the base matrix phase, and contributing to the formation of a high-alloy phase, and can be contained as necessary. When Co is contained, Co is preferably contained in an amount of 1.00% or more. On the other hand, when the content of Co exceeds 10.00%, improvement of the effect cannot be expected. Therefore, when Co was contained, the content thereof was limited to 10.00% or less. The content thereof is preferably 1.00 to 5.00%.

### Ni: 2.00 to 8.00%

Ni is an element contributing to improvement in strength and toughness of the base matrix phase and generation of the high-alloy phase, and Ni is an element contributing to an increase in toughness of the hard particles as a constituent element of the intermetallic compound particles, and is contained in an amount of 2.00% or more. On the other hand, when the content of Ni exceeds 8.00%, the density during powder molding is less likely to increase, and formability is deteriorated. Therefore, the content of Ni was limited to a range of 2.00 to 8.00%. The content thereof is preferably 3.00 to 7.00%.

### V: 0.50 to 4.00%

V is an element precipitating as fine carbide, increasing the hardness of the base matrix phase, and improving wear resistance, and is required to be contained in an amount of 0.50% or more. On the other hand, when the content of V exceeds 4.00%, formability is deteriorated. Therefore, the content of V was limited to a range of 0.50 to 4.00%. The content thereof is preferably 1.00 to 3.00%.

### W: 4.00 to 10.00%

W is an element precipitating as fine carbide, increasing the hardness of the base matrix phase, and improving wear resistance, and is required to be contained in an amount of 4.00% or more. On the other hand, when the content of W exceeds 10.00%, formability is deteriorated. Therefore, the content of W was limited to a range of 4.00 to 10.00%. The content thereof is preferably 3.00 to 7.00%.

The base matrix part can contain one or two or more selected from the above-described components. The base matrix part can contain S: 0 to 2.00% in addition to the above-described components.

### S: 0 to 2.00%

S is an element contained in the solid lubricant particles, contained in the base matrix part, and contributing to improvement in machinability, and can be contained as necessary. When S is contained in an amount exceeding 2.00%, toughness and ductility are deteriorated. Therefore, the content of S is preferably limited to a range of 0 to 2.00%.

The balance other than the above-described components is Fe and unavoidable impurities. As the unavoidable impurities, P: 0.10% or less is acceptable.

Next, the supporting material when the valve seat insert of the present invention has a two-layer structure will be described. The valve contacting face material with a two-layer structure is the same as the valve contacting face material in the case of the single-layer structure described above. The supporting material in the case of the two-layer structure may be any layer as long as it can hold the valve contacting face material, and is not particularly limited. Solid lubricant particles for improving machinability may be dispersed in the base matrix phase as necessary. Examples of the solid lubricant particles include MnS and MoS₂. In the case of dispersion, the solid lubricant particles are preferably dispersed in an amount of 0.3% or more in terms of area ratio with respect to the entire structure of the supporting material. When the dispersion amount of the solid lubricant particles is less than 0.3%, it is difficult to achieve the object of improving machinability. On the other hand, even when the solid lubricant particles are dispersed in an amount exceeding 4.0% in terms of area ratio, the effect is saturated, and the effect corresponding to the dispersion amount cannot be expected. Therefore, in the case of dispersion, the solid lubricant particles are preferably limited to 4.0% or less in terms of area ratio. The base matrix phase of the supporting material is pearlite.

In order to increase the strength of the base matrix phase, the hardness improving particles may be dispersed in the base matrix phase of the supporting material in an amount of 0 to 5.0% in terms of area ratio. Examples of the hardness improving particles dispersed in the supporting material include iron-molybdenum (Fe-Mo) type alloys. Even when the hardness improving particles were dispersed in an amount exceeding 5.0% in terms of area ratio, the effect was saturated, so that the upper limit was 5.0%.

The supporting material has a structure in which solid lubricant particles and hardness improving particles are dispersed in the base matrix phase as necessary. The balance other than the base matrix phase, the solid lubricant particles, and the hardness improving particles are pores. The pores are preferably impregnated with a thermosetting resin or an anaerobic resin, similarly to the valve contacting face material. By impregnating the pores with a thermosetting resin or an anaerobic resin and sealing the pores, cuttability and machinability are improved without significantly lowering wear resistance, and improvement in corrosion resistance can be expected.

In the supporting material of the valve seat insert of the present invention, the base matrix part including the base matrix phase, the solid lubricant particles, and the hardness improving particles preferably has a composition containing, by mass%, C: 0.30 to 2.00% and further containing Ni: 0 to 2.00%, Mo: 0 to 2.00%, Cu: 0 to 5.00%, Mn: 0 to 5.00%, and S: 0 to 2.00% with the balance being Fe and unavoidable impurities.

A reason for limiting the base matrix part composition of the supporting material will be described.

C is contained in an amount of 0.30% or more in order to secure a desired strength. On the other hand, when the content thereof exceeds 2.00%, the strength becomes too high and the toughness decreases. Therefore, the content of C is preferably limited to a range of 0.30 to 2.00%. The content of C is preferably 0.30 to 1.20%. When the pores are impregnated with a resin, the content of C is preferably 1.40 to 1.80%. The base matrix part of the supporting material may contain, in addition to C described above, Ni: 0 to 2.00%, Mo: 0 to 2.00%, Cu: 0 to 5.00%, Mn: 0 to 5.00%, and S: 0 to 2.00%.

Ni, Mo, and Cu are elements increasing the strength (hardness) of the base matrix phase of the supporting material, and can be contained as necessary. Ni, Mo, and Cu are contained depending on a desired strength, but when Ni, Mo, and Cu are contained in amounts exceeding Ni: 2.00%, Mo: 2.00%, and Cu: 5.00%, respectively, the strength becomes too high. Therefore, when these elements are contained, the contents thereof are preferably limited to ranges of Ni: 2.00% or less, Mo: 2.00% or less, and Cu: 5.00% or less. A part of Mo, and Mn and S are contained in the base matrix part due to dispersion of the solid lubricant particles, but even when a large amount of the solid lubricant particles are dispersed, the effect is saturated and ductility decreases. Therefore, when these elements are contained, the contents thereof are preferably limited to Mn: 5.00% or less and S: 2.00% or less.

The balance other than the above-described components is Fe and unavoidable impurities. As the unavoidable impurities, P: 0.10% or less is acceptable.

Next, a method for producing a valve seat insert made of an iron-based sintered alloy of the present invention will be described.

In the method for producing a valve seat insert made of an iron-based sintered alloy with a single-layer structure of the present invention, first, predetermined amounts of an iron-based powder, a graphite powder, an alloy element powder, and a hard particle powder, or further a solid lubricant particle powder are blended so as to have the above-described base matrix part composition, and mixed and kneaded to obtain a mixed powder (mixed powder for a valve contacting face material).

The iron-based powder to be blended in the mixed powder (mixed powder for a valve contacting face material) is a powder to be blended to form a base matrix phase, and in the present invention, is an alloy steel powder with which the base matrix phase can have a structure composed of a fine carbide precipitation phase. As such an alloy steel powder, a powder having a composition conforming to the high speed tool steel composition defined in JIS G 4403 can be exemplified, but it is needless to say that the alloy steel powder is not limited thereto.

The iron-based powder to be blended is an iron-based powder having a composition containing, by mass%, C: 0.2 to 0.8%, Si: 1.0% or less, Mn: 1.0% or less, Cr: 7.0% or less, Mo: 7.0% or less, V: 5.0% or less, and W: 12.0% or less or further containing Co: 12.0% or less with the balance being Fe and unavoidable impurities, and having a particle hardness of 170 to 280 HV in Vickers hardness. The iron-based powder to be blended in the present invention is a powder having a high-speed steel composition with reduced C.

A reason for limiting the composition of the iron-based powder will be described. Hereinafter, mass% in the composition is simply expressed as %.

### C: 0.2 to 0.8%

When the content of C is less than 0.2%, the melting point increases, which makes it difficult to produce a powder. On the other hand, when the content of C exceeds 0.8%, the hardness of the powder particles becomes too high, and the compressibility of the powder particles decreases. Therefore, the C content of the iron-based powder is preferably limited to a range of 0.2 to 0.8%. The content thereof is more preferably 0.4 to 0.6%.

### Si: 1.0% or less

Si is an element affecting the molten metal fluid flow during powder production (during atomized powder production). In order to obtain such an effect, it is remarkable when the content of Si is 0.3% or more. On the other hand, when Si is contained in an amount exceeding 1.0%, the compressibility is deteriorated. Therefore, the content of Si is preferably limited to 1.0% or less. The content thereof is more preferably 0.50 or less.

### Mn: 1.0% or less

Mn acts as a deoxidizer and contributes to an increase in strength (hardness). Such an effect becomes remarkable when the content thereof is 0.10% or more. On the other hand, when the content thereof exceeds 1.0%, the oxygen concentration of the powder increases, and the diffusivity during sintering decreases. When Mn is contained in an amount exceeding 1.0%, the hardness increases, and the compressibility decreases. Therefore, the content of Mn is preferably limited to 1.0% or less.

### Cr: 7.0% or less

Cr is an element forming a carbide and having an effect of improving wear resistance. Such an effect becomes remarkable when Cr is contained in an amount of 0.1% or more, but when Cr is contained in an amount exceeding 7.0%, the toughness decreases. Therefore, the content of Cr is preferably limited to 7.0% or less.

### Mo: 7.0% or less

Mo is an element forming a fine carbide and having an effect of improving wear resistance. Such an effect becomes remarkable when Mo is contained in an amount of 2.0% or more, but when Mo is contained in an amount exceeding 7.0%, the formability decreases. Therefore, the content of Mo is preferably limited to 7.0% or less. The content thereof is more preferably 2.0 to 5.0%.

### V: 5.0% or less

V is an element forming a fine carbide and having an effect of improving wear resistance. Such an effect becomes remarkable when V is contained in an amount of 2.0% or more, but when V is contained in an amount exceeding 5.0%, the formability decreases. Therefore, the content of V is preferably limited to 5.0% or less. The content thereof is more preferably 2.0 to 4.0%.

### W: 12.0% or less

W is an element forming a fine carbide and having an effect of improving wear resistance. Such an effect becomes remarkable when W is contained in an amount of 5.0% or more, but when W is contained in an amount exceeding 12.0%, the formability decreases. Therefore, the content of W is preferably limited to 12.0% or less.

In addition to the above-described components, Co: 12.0% or less may be further contained as necessary.

### Co: 0 to 12.0%

Co is an element increasing the strength particularly the high-temperature strength, further contributing to improvement in toughness, and contributing to the formation of a high-alloy phase, and is preferably contained in an amount of 10.0% or more as necessary. On the other hand, the content of Co exceeding 12.0% leads to a decrease in strength. Therefore, when Co was contained, the content thereof is preferably limited to 12.0% or less.

The balance other than the above-described components is Fe and unavoidable impurities. As the unavoidable impurities, P: 0.03% or less and S: 0.02% or less are acceptable. P is preferably reduced as much as possible because P segregates at austenite grain boundaries to promote grain boundary embrittlement. The content thereof is more preferably 0.010% or less. S is present as a sulfide-based inclusion in steel and inhibits hot machinability, and thus it is desirable to reduce S as much as possible. The content thereof is more preferably 0.005% or less.

### Particle hardness: 170 to 280 HV

The iron-based powder used in the present invention is a powder having a particle hardness of 170 to 280 HV. When the particle hardness is less than 170 HV, the hardness of the iron-based powder is too low, and the wear resistance as a sintered body is deteriorated. On the other hand, when the particle hardness is increased to more than 280 HV, the compressibility is reduced, and the radial crushing strength as a sintered body is reduced. Therefore, the particle hardness of the iron-based powder to be blended was limited to 170 to 280 HV.

The hard particle powder to be blended in the mixed powder is a Si-Cr-Mo-Ni type Fe-based intermetallic compound particle powder having the hardness and composition described above. In the present invention, such a hard particle powder is blended at 10.0 to 40.0% with respect to the total amount of the mixed powder by mass%. The hard particle powder to be blended is preferably a particle powder having an average particle size of 10 to 150 µm. When the average particle size of the particles is less than 10 µm, the particles are likely to be excessively diffused during sintering, and desired wear resistance cannot be secured. On the other hand, when the average particle size of the particles exceeds 150 µm, the bonding strength with the base matrix decreases. The term "average particle size" as described herein means a particle size D50 at which a cumulated distribution measured by a laser diffraction method is 50%.

The solid lubricant particles are blended in order to improve machinability, processability, and lubricity. The solid lubricant particles are preferably MnS, MoS₂, or the like. The blending amount of the solid lubricant particle powder is preferably 0 to 4.0% with respect to the total amount of the mixed powder by mass%.

It is needless to say that predetermined amounts of the iron-based powder, and the hard particle powder, or further the solid lubricant particle powder described above are blended in the mixed powder, and the graphite powder and the alloy element powder are further blended so as to have the base matrix part composition described above. Examples of the alloy element powder to be blended include a Ni powder and a Co powder. A lubricant such as zinc stearate may be blended in the mixed powder.

As described above, predetermined amounts of the graphite powder, the alloy element powder, and the hard particle powder, or further the solid lubricant particle powder are further blended with the iron-based powder, and mixed and kneaded to obtain a mixed powder.

A die having a predetermined valve seat insert shape is then filled with the obtained mixed powder.

The mixed powder is charged in the die and then subjected to press working with a press working machine or the like to form a green compact having a valve seat insert shape. In the press working, it is preferable to adjust the density of the green compact to 6.6 g/cm³ or more.

The obtained green compact is then subjected to a sintering treatment to obtain a sintered body.

The sintering treatment is preferably a treatment in which the green compact is held for 0.5 hr or more in a temperature range of a heating temperature: 1100 to 1200°C in a nitrogen or hydrogen gas, or the like, or in a reducing atmosphere such as an ammonia cracking gas. When the heating temperature is lower than 1100°C, sintered diffusion is insufficient; on the other hand, when the heating temperature is higher than 1200°C, over-diffusion occurs, and wear resistance is deteriorated. The press working P-sintering treatment S step may be repeated a plurality of times (2P2S or the like).

The obtained sintered body is subjected to processing such as grinding or cutting to obtain a valve seat insert (single-layer structure) having a desired dimensional shape.

The valve seat insert (product) obtained through the above steps is preferably subjected to a resin impregnation treatment. The resin impregnation treatment is preferably a treatment in which the valve seat insert is immersed in a liquid of a thermosetting resin or an anaerobic resin in a vacuum atmosphere, then the valve seat insert is further pressurized from atmospheric pressure to sufficiently impregnate the resin in the pores, and then the resin in the pores is cured by heating to seal the pores.

Next, in the method for producing a valve seat insert made of an iron-based sintered alloy with a two-layer structure of the present invention, a mixed powder for a supporting material is further prepared in addition to the above-described mixed powder (mixed powder for a valve contacting face material).

As the mixed powder for a supporting material, predetermined amounts of an iron-based powder and a graphite powder, or further an alloy element powder, a hardness improving particle powder, and a solid lubricant powder are blended, and mixed and kneaded to obtain a mixed powder. In the mixed powder for a supporting material, the iron-based powder is a pure iron powder. The graphite powder is blended in an amount of 0.5 to 2.0% with respect to the total amount of the mixed powder for a supporting material by mass%. The alloy element powder is blended in an amount of 0 to 5.0% in total with respect to the total amount of the mixed powder for a supporting material by mass%. As the alloy element powder to be blended, a Mo powder, a Ni powder, or a Cu powder is preferable. The hardness improving particle powder is an iron-molybdenum (Fe-Mo) alloy particle powder, and the hardness improving particle powder is blended in an amount of 0 to 5.0% with respect to the total amount of the mixed powder for a supporting material by mass%. The solid lubricant powder is blended in an amount of 0 to 4.0% with respect to the total amount of the mixed powder for a supporting material by mass%.

A die having a predetermined shape is filled with the mixed powder for a valve contacting face material and the mixed powder for a supporting material in this order at a desired ratio.

After the die is filled with the mixed powders, press working is performed in the same manner as in the case of the single-layer structure described above to obtain a green compact, and then the green compact is subjected to a sintering treatment in the same manner as in the case of the single-layer structure described above to obtain a sintered body with a two-layer structure.

The obtained sintered body is subjected to processing such as grinding or cutting to obtain a valve seat insert with a two-layer structure having a desired dimensional shape.

Also for the obtained valve seat insert with a two-layer structure, it is preferable to perform a resin impregnation treatment for impregnating the pores with a thermosetting resin or an anaerobic resin in the same manner as in the valve seat insert with a single-layer structure described above. The pores of the valve seat inserts (iron-based sintered alloy materials) with a single-layer structure and a two-layer structure subjected to the resin impregnation treatment are impregnated with a thermosetting resin or an anaerobic resin.

Hereinafter, the present invention will be further described with reference to Examples.

### Examples

First, a mixed powder for a valve contacting face material and a mixed powder for a supporting material were prepared.

As the mixed powder for a valve contacting face material, a graphite powder, an alloy element powder, a hard particle powder, and a solid lubricant particle powder (MnS powder) were mixed and kneaded with an iron-based powder for base matrix phase formation so as to have the blending amount shown in Table 1, thereby obtaining a mixed powder. The iron-based powder used was a high speed tool steel type powder having the composition and hardness shown in Table 2. The hard particle powder used was a particle powder having the composition, hardness, and average particle size shown in Table 3.

As the mixed powder for a supporting material, an iron-based powder for base matrix phase formation and a graphite powder, or further an alloy element powder, a hard particle powder, and a solid lubricant particle powder were mixed and kneaded so as to have the blending amount shown in Table 1, thereby obtaining a mixed powder. The iron-based powder used was a powder having the composition and hardness shown in Table 2. The iron-based powder No. d is a pure iron powder. The hard particle powder used was a particle powder having the composition, hardness, and average particle size shown in Table 3. Here, the hard particle powder No. h3 is a hardness improving particle powder, which is an iron-molybdenum (ferromolybdenum) alloy particle powder. In the mixed powder, 1 part by mass of zinc stearate was blended as a lubricant with respect to 100 parts by mass of the mixed powder. Some valve seat inserts had a single-layer structure including only the valve contacting face material.

**[Table 1]**

| Mixed powder No. | Iron-based powder | Hard particle powder | Graphite powder | Alloy element powder | Solid lubricant particle powder |
|---|---|---|---|---|---|
| | Type*: blending amount (mass%) | Type**:blending amount (mass%) | Blending amount (mass%) | Type: blending amount (mass%) | Type: blending amount (mass%) |
| A | a:64.4 | h1:30.0 | C:0.6 | Co:3.0 | MnS:2.0 |
| B | b:61.8 | h2:30.0 | C:1.2 | Co:3.0,Ni:2.0 | MnS:2.0 |
| C | b:51.8 | h2:40.0 | C:1.2 | Co:3.0,Ni:2.0 | MnS:2.0 |
| D | b:81.8 | h2:10.0 | C:1.2 | Co:3.0,Ni:2.0 | MnS:2.0 |
| E | b:60.8 | h2:30.0 | C:1.2 | Co:3.0,Ni:3.0 | MnS:2.0 |
| F | b:62.8 | h2:30.0 | C:1.2 | Co:2.0,Ni:2.0 | MnS:2.0 |
| G | b:64.8 | h2:30.0 | C:1.2 | Co:1.0,Ni:1.0 | MnS:2.0 |
| H | b:63.8 | h2:30.0 | C:1.2 | Ni:3.0 | MnS:2.0 |
| I | b:62.8 | h2:30.0 | C:1.2 | Co:3.0,Ni:2.0 | MnS:1.0 |
| J | b:63.8 | h2:30.0 | C:1.2 | Co:3.0,Ni:2.0 | - |
| K | b:41.8 | h2:50.0 | C:1.2 | Co:3.0,Ni:2.0 | MnS:2.0 |
| L | b:62.2 | h2:30.0 | C:0.8 | Co:3.0,Ni:2.0 | MnS:2.0 |
| M | b:62.9 | h2:30.0 | C:0.1 | Co:3.0,Ni:2.0 | MnS:2.0 |
| N | c:61.8 | h2:30.0 | C:1.2 | Co:3.0,Ni:2.0 | MnS:2.0 |
| 1A | d:98.0 | - | C:1.0 | - | MnS:1.0 |
| 1B | d:94.5 | h3:1.0 | C:1.0 | Cu:3.0,Ni:0.5 | - |

| | | | | | |
|---|---|---|---|---|---|
| *) See Table 2 **) See Table 3 | | | | | |

**[Table 2]**

| Iron-based powder No. | Component type | Chemical component (mass%) | | | | | | | | | Hardness | Average particle size D50 |
|---|---|---|---|---|---|---|---|---|---|---|---|---|
| | | C | Si | Mn | Cr | Mo | V | W | Co | Balance | HV | µm |
| a | High speed tool steel powder | 0.90 | 0.40 | 0.25 | 4.0 | 5.0 | 2.0 | 6.0 | - | Fe | 250 | 70 |
| b | High speed tool steel powder | 0.50 | 0.40 | 0.25 | 4.0 | 3.5 | 3.5 | 10.0 | - | Fe | 200 | 75 |
| c | High speed tool steel powder | 0.50 | 0.40 | 0.25 | 4.0 | 3.5 | 3.5 | 10.0 | 10.0 | Fe | 250 | 70 |
| d | Pure iron powder (reduced iron powder) | - | - | - | - | - | - | - | - | Fe | 100 | 90 |

**[Table 3]**

| Hard particles No. | Component type | Composition (mass%) | Hardness HV | Average particle size D50 (µm) |
|---|---|---|---|---|
| h1 | Si-Cr-Mo type Co-based intermetallic compound particles | 2.6% Si-8.0% Cr-28.5% Mo-balance Co | 750 | 60 |
| h2 | Si-Cr-Mo-Ni type Fe-based intermetallic compound particle | 2.8% Si-8.0% Cr-40.0% Mo-10.0% Ni-balance Fe | 1050 | 65 |
| h3 | Fe-Mo type alloy iron (for hardness improvement) | 60.0% Mo-balance Fe | 1400 | 35 |

The obtained mixed powder was charged in a die and formed into a green compact having a predetermined valve seat insert shape by a press working machine. The density of the obtained green compact was 6.6 g/cm³ or more.

Next, the obtained green compact was subjected to a sintering treatment. In the sintering treatment, the green compact was charged into a sintering furnace set at a heating temperature of 1160°C in a reducing atmosphere (holding time: 6 hr) to obtain a sintered body.

The obtained sintered body was further subjected to processing such as cutting or polishing to obtain a valve seat insert made of an iron-based sintered alloy having a predetermined shape (outer diameter: 27 mmΦ × inner diameter 22 mmΦ × thickness 6 mm).

A part of the obtained valve seat insert was further subjected to a resin impregnation treatment using an anaerobic resin. The resin impregnation treatment was a treatment in which the valve seat insert was immersed in a liquid of the resin in a vacuum atmosphere, then the valve seat insert was further pressurized from atmospheric pressure to sufficiently impregnate the resin in the pores, and the resin in the pores was cured by further heating to seal the pores. The resin used was a commercially available anaerobic resin.

For the obtained valve seat insert, chemical analysis, structure observation, a hardness test, a density test, a wear test, and a radial crushing strength test were performed. The test method was as follows.

### (1) Chemical analysis

A sample for analysis was collected from each part of the obtained valve seat insert, the content of each component in each part was analyzed by a luminescence analysis method, and the composition of the sintered body base matrix part was determined.

### (2) Structure observation

For the obtained valve seat insert, a cross section perpendicular to the axial direction was polished and etched (etching solution: nital solution) to reveal the structure, and the structure was observed with an optical microscope (magnification: 200 times). The type of the base matrix phase structure was identified using the observed structure photograph, and the area ratio with respect to the entire structure was measured. The carbide precipitated in the base matrix phase was observed using a scanning electron microscope (magnification: 2000 times), and the particle size of the carbide was measured. It was confirmed that the maximum carbide particle size was 10 µm or less, and the base matrix phase was regarded as a fine carbide precipitation phase. When the maximum diameter of the carbide particle size (long side length) exceeded 10 µm, it was simply defined as a carbide precipitation phase.

The alloy is diffused around the hard particles to form a high-alloy phase. A cross section perpendicular to the axial direction was polished and etched (etching solution: marble solution) to reveal the structure, the structure was observed with an optical microscope (magnification: 200 times), and a structural fraction (area ratio with respect to the entire structure) was measured by image analysis.

### (3) Hardness test

For the obtained valve seat insert, a cross section perpendicular to the axial direction was polished and etched (etching solution: nital solution) to reveal the structure, and the Vickers hardness HV of the base matrix phase was measured using a Vickers hardness tester (test force: 0.98 N (100 gf)).

### (4) Density test

For the obtained valve seat insert (only the valve contacting face material, only the supporting material and the two-layer structure), the density (sintered body density) was measured using an Archimedes method.

### (5) Wear test

The obtained valve seat insert was subjected to a wear test under the following test conditions using a single rig testing machine illustrated in Fig. 1.

### Test temperature: 150°C, 250°C (seating side temperature)

Test period: 12 hr
Cam rotation speed: 3000 rpm
Valve rotation speed: 20 rpm
Impact load: 700 N
Valve material: heat-resistant steel with nitride film (SUH35 surface hardness 1150 HV)

After the test, the wear amount of a test piece (valve seat insert) was measured. From the obtained wear amount, the wear ratio of the valve seat insert was calculated with the valve seat insert No. 1 (conventional example) as a standard (1.00).

### (6) Radial crushing strength test

The radial crushing strength of the valve contacting face material of the obtained valve seat insert was determined in accordance with JIS Z 2507. From the obtained radial crushing strength, the radial crushing strength ratio of the valve contacting face material of the valve seat insert was calculated with the valve seat insert No. 1 (conventional example) as a standard (1.00). The radial crushing strength of the valve contacting face material of the valve seat insert No. 1 (conventional example) was 490 MPa.

The obtained results are shown in Tables 4 and 5.

**[Table 4]**

| Valve seat insert No. | Part | Mixed powder No. | Base matrix part chemical component (mass%) | | | | | | | | | | | | Remark |
|---|---|---|---|---|---|---|---|---|---|---|---|---|---|---|---|
| | | | C | Si | Mn | Cr | Mo | W | V | Co | Ni | S | Others | Balance | |
| 1 | Valve contacting face material | A | 1.18 | 1.04 | 1.42 | 5.13 | 11.77 | 3.86 | 1.29 | 21.00 | - | 0.74 | - | Fe | Conventional example |
| | Supporting material | 1B | 1.00 | - | - | - | 0.60 | - | - | - | 0.50 | - | Cu:3.00 | Fe | |
| 2 | Valve contacting face material | B | 1.51 | 0.83 | 1.42 | 4.87 | 14.16 | 6.18 | 2.16 | 3.00 | 5.00 | 0.74 | - | Fe | Adaptable example |
| | Supporting material | 1B | 1.00 | - | - | - | 0.60 | - | - | - | 0.50 | - | Cu:3.00 | Fe | |
| 3 | Valve contacting face material | C | 1.46 | 1.11 | 1.39 | 5.27 | 17.81 | 5.18 | 1.81 | 3.00 | 6.00 | 0.74 | - | Fe | Adaptable example |
| | Supporting material | 1B | 1.00 | - | - | - | 0.60 | - | - | - | 0.50 | - | Cu:3.00 | Fe | |
| 4 | Valve contacting face material | D | 1.61 | 0.28 | 1.47 | 4.07 | 6.86 | 8.18 | 2.86 | 3.00 | 3.00 | 0.74 | - | Fe | Adaptable example |
| | Supporting material | 1B | 1.00 | - | - | - | 0.60 | - | - | - | 0.50 | - | Cu:3.00 | Fe | |
| 5 | Valve contacting face material | E | 1.50 | 0.83 | 1.42 | 4.83 | 14.13 | 6.08 | 2.13 | 3.00 | 6.00 | 0.74 | - | Fe | Adaptable example |
| | Supporting material | 1B | 1.00 | - | - | - | 0.60 | - | - | - | 0.50 | - | Cu:3.00 | Fe | |
| 6 | Valve contacting face material | F | 1.51 | 0.83 | 1.42 | 4.91 | 14.20 | 6.28 | 2.20 | 2.00 | 5.00 | 0.74 | - | Fe | Adaptable example |
| | Supporting material | 1B | 1.00 | - | - | - | 0.60 | - | - | - | 0.50 | - | Cu:3.00 | Fe | |
| 7 | Valve contacting face material | G | 1.52 | 0.83 | 1.43 | 4.99 | 14.27 | 6.48 | 2.27 | 1.00 | 4.00 | 0.74 | - | Fe | Adaptable example |
| | Supporting material | 1B | 1.00 | - | - | - | 0.60 | - | - | - | 0.50 | - | Cu:3.00 | Fe | |
| 8 | Valve contacting face material | H | 1.52 | 0.83 | 1.42 | 4.95 | 14.23 | 6.38 | 2.23 | - | 6.00 | 0.74 | - | Fe | Adaptable example |
| | Supporting material | 1B | 1.00 | - | - | - | 0.60 | - | - | - | 0.50 | - | Cu:3.00 | Fe | |
| 9 | Valve contacting face material | I | 1.51 | 0.83 | 0.79 | 4.91 | 14.20 | 6.28 | 2.20 | 3.00 | 5.00 | 0.37 | - | Fe | Adaptable example |
| | Supporting material | 1B | 1.00 | - | - | - | 0.60 | - | - | - | 0.50 | - | Cu:3.00 | Fe | |
| 10 | Valve contacting face material | J | 1.52 | 0.83 | 0.16 | 4.95 | 14.23 | 6.38 | 2.23 | 3.00 | 5.00 | - | - | Fe | Adaptable example |
| | Supporting material | 1B | 1.00 | - | - | - | 0.60 | - | - | - | 0.50 | - | Cu:3.00 | Fe | |
| 11 | Valve contacting face material | K | 1.41 | 1.39 | 1.37 | 5.67 | 21.46 | 4.18 | 1.46 | 3.00 | 7.00 | 0.74 | - | Fe | Comparative example |
| | Supporting material | 1B | 1.00 | - | - | - | 0.60 | - | - | - | 0.50 | - | Cu:3.00 | Fe | |
| 12 | Valve contacting face material | L | 1.11 | 0.83 | 1.42 | 4.89 | 14.18 | 6.22 | 2.18 | 3.00 | 5.00 | 0.74 | - | Fe | Adaptable example |
| | Supporting material | 1B | 1.00 | - | - | - | 0.60 | - | - | - | 0.50 | - | Cu:3.00 | Fe | |
| 13 | Valve contacting face material | M | 0.41 | 0.83 | 1.42 | 4.92 | 14.20 | 6.29 | 2.20 | 3.00 | 5.00 | 0.74 | - | Fe | Comparative example |
| | Supporting material | 1B | 1.00 | - | - | - | 0.60 | - | - | - | 0.50 | - | Cu:3.00 | Fe | |
| 14 | Valve contacting face material | F | 1.51 | 0.83 | 1.42 | 4.91 | 14.20 | 6.28 | 2.20 | 2.00 | 5.00 | 0.74 | - | Fe | Adaptable example |
| | Supporting material | 1A | 1.00 | - | 0.63 | - | - | - | - | - | - | 0.37 | - | Fe | |
| 15 | Valve contacting face material | N | 1.51 | 0.83 | 1.42 | 4.87 | 14.16 | 6.18 | 2.16 | 9.20 | 5.00 | 0.74 | - | Fe | Adaptable |
| | Supporting material | 1B | 1.00 | - | - | - | 0.60 | - | - | - | 0.50 | - | Cu:3.00 | Fe | example |
| 16 | Valve contacting face material | B | 1.51 | 0.83 | 1.42 | 4.87 | 14.16 | 6.18 | 2.16 | 3.00 | 5.00 | 0.74 | - | Fe | Adaptable example |
| 17 | Valve contacting face material | F | 2.37 | 0.83 | 1.42 | 4.91 | 14.20 | 6.28 | 2.20 | 2.00 | 5.00 | 0.74 | - | Fe | Adaptable example |
| | Supporting material | 1B | 1.56 | - | - | - | 0.60 | - | - | - | 0.50 | - | Cu:3.00 | Fe | |
| 18 | Valve contacting face material | F | 2.37 | 0.83 | 1.42 | 4.91 | 14.20 | 6.28 | 2.20 | 2.00 | 5.00 | 0.74 | - | Fe | Adaptable example |

**[Table 5]**

| Valve seat insert No. | Part | Mixed powder No. | Base matrix part structure | | | | Base matrix phase hardness | Presence or absence of resin impregnation | Density (g/cm³) | | | Radial crushing strength | Wear resistance | | Remark |
|---|---|---|---|---|---|---|---|---|---|---|---|---|---|---|---|
| | | | Type: area ratio* (%) | | | | HV | | Sintered body (valve contacting face material) | Sintered body (supporting material) | Sintered body (two-layer) | Radial crushing strength ratio***** (standard: 1.00) | Wear ratio (standard: 1.00) | | |
| | | | High-alloy phase | Hard particles | Solid lubricant particles | Base matrix phase*** | | | | | | | 150°C | 250°C | |
| 1 | Valve contacting face material | A | 2.6 | h1:30.0 | MnS:2.0 | a:51.9 | 580 | Absent | 6.80 | 7.05 | 7.00 | 1.00 (standard) | 1.00 (standard) | 1.00 (standard) | Conventional example |
| | Supporting material | 1B | - | h3:1.0** | - | P:89.0 | - | | | | | | | | |
| 2 | Valve contacting face material | B | 14.3 | h2:30.0 | MnS:2.0 | a:44.0 | 590 | Absent | 7.10 | 7.05 | 7.15 | 1.20 | 0.60 | 0.50 | Inventive example |
| | Supporting material | 1B | - | h3:1.0** | - | P:89.0 | - | | | | | | | | |
| 3 | Valve contacting face material | C | 24.5 | h2:40.0 | MnS:2.0 | a:21.9 | 600 | Absent | 6.95 | 7.05 | 6.95 | 1.01 | 0.62 | 0.45 | Inventive example |
| | Supporting material | 1B | - | h3:1.0** | - | P:89.0 | - | | | | | | | | |
| 4 | Valve contacting face material | D | 5.0 | h2:10.0 | MnS:2.0 | a:73.3 | 590 | Absent | 7.10 | 7.05 | 7.10 | 1.30 | 0.99 | 0.99 | Inventive example |
| | Supporting material | 1B | - | h3:1.0** | - | P:89.0 | - | | | | | | | | |
| 5 | Valve contacting face material | E | 17.3 | h2:30.0 | MnS:2.0 | a:41.7 | 590 | Absent | 7.15 | 7.05 | 7.16 | 1.25 | 0.60 | 0.45 | Inventive example |
| | Supporting material | 1B | - | h3:1.0** | - | P:89.0 | - | | | | | | | | |
| 6 | Valve contacting face material | F | 13.3 | h2:30.0 | MnS:2.0 | a:44.4 | 590 | Absent | 7.05 | 7.05 | 7.15 | 1.15 | 0.65 | 0.55 | Inventive example |
| | Supporting material | 1B | - | h3:1.0** | - | P:89.0 | - | | | | | | | | |
| 7 | Valve contacting face material | G | 12.1 | h2:30.0 | MnS:2.0 | a:45.0 | 590 | Absent | 7.00 | 7.05 | 7.12 | 1.10 | 0.70 | 0.60 | Inventive example |
| | Supporting material | 1B | - | h3:1.0** | - | P:89.0 | - | | | | | | | | |
| 8 | Valve contacting face material | H | 15.1 | h2:30.0 | MnS:2.0 | a:43.2 | 590 | Absent | 7.10 | 7.05 | 7.10 | 1.15 | 0.80 | 0.75 | Inventive example |
| | Supporting material | 1B | - | h3:1.0** | - | P:89.0 | - | | | | | | | | |
| 9 | Valve contacting face material | I | 14.5 | h2:30.0 | MnS:1.0 | a:45.5 | 590 | Absent | 7.15 | 7.05 | 7.17 | 1.25 | 0.59 | 0.49 | Inventive example |
| | Supporting material | 1B | - | h3:1.0** | - | P:89.0 | - | | | | | | | | |
| 10 | Valve contacting face material | J | 14.2 | h2:30.0 | - | a:47.1 | 590 | Absent | 7.18 | 7.05 | 7.20 | 1.30 | 0.58 | 0.47 | Inventive example |
| | Supporting material | 1B | - | h3:1.0** | - | P:89.0 | - | | | | | | | | |
| 11 | Valve contacting face material | K | 27.1 | h2:50.0 | MnS:2.0 | a:6.1 | 620 | Absent | 6.70 | 7.05 | 6.90 | 0.90 | 0.60 | 0.50 | Comparative example |
| | Supporting material | 1B | - | h3:1.0** | - | P:89.0 | - | | | | | | | | |
| 12 | Valve contacting face material | L | 14.2 | h2:30.0 | MnS:2.0 | a:43.5 | 500 | Absent | 7.05 | 7.05 | 7.10 | 1.05 | 0.62 | 0.52 | Inventive example |
| | Supporting material | 1B | - | h3:1.0** | - | P:89.0 | - | | | | | | | | |
| 13 | Valve contacting face material | M | 13.0 | h2:30.0 | MnS:2.0 | a:43.4 | 398 | Absent | 6.95 | 7.05 | 7.00 | 0.90 | 1.01 | 1.02 | Comparative example |
| | Supporting material | 1B | - | h3:1.0** | - | P:89.0 | - | | | | | | | | |
| 14 | Valve contacting face material | F | 13.3 | h2:30.0 | MnS:2.0 | a:44.4 | 590 | Absent | 7.05 | 7.13 | 7.12 | 1.15 | 0.65 | 0.55 | Inventive example |
| | Supporting material | 1A | - | - | MnS:1.0 | P:90.0 | - | | | | | | | | |
| 15 | Valve contacting face material | N | 14.9 | h2:30.0 | MnS:2.0 | a:37.2 | 600 | Absent | 7.00 | 7.05 | 7.03 | 1.10 | 0.60 | 0.50 | Inventive example |
| | Supporting material | 1B | - | h3:1.0** | - | P:89.0 | - | | | | | | | | |
| 16 | Valve contacting face material | B | 14.3 | h2:30.0 | MnS:2.0 | a:44.0 | 590 | Absent | 7.10 | - | - | 1.20 | 0.60 | 0.50 | Inventive example |
| 17 | Valve contacting face material | F | 13.3 | h2:30.0 | MnS:2.0 | a:44.4 | 590 | Present | 7.08 | 7.10 | 7.17 | 1.15 | 0.65 | 0.55 | Inventive example |
| | Supporting material | 1B | - | h3:1.0** | - | P:89.0 | - | | | | | | | | |
| 18 | Valve contacting face material | F | 13.3 | h2:30.0 | MnS:2.0 | a:44.4 | 590 | Present | 7.08 | - | - | 1.15 | 0.65 | 0.55 | Inventive example |

| | | | | | | | | | | | | | | | |
|---|---|---|---|---|---|---|---|---|---|---|---|---|---|---|---|
| *) The balance is pores. **) Hardness improving particles ***) a: fine carbide precipitation phase, P: pearlite *****) Radial crushing strength of only valve contacting face material | | | | | | | | | | | | | | | |

In all the inventive examples, the sintered body density of the valve contacting face material is particularly high, the radial crushing strength ratio is high, the radial crushing strength is improved, the wear ratio is low, and the wear resistance is improved as compared with the conventional example (valve seat insert No. 1). The material for the valve seat insert for an internal combustion engine of the present invention can be expected to contribute to improvement in wear resistance of a valve seat insert for an internal combustion engine using a gas fuel such as LPG, CNG, or hydrogen and a special fuel such as ethanol-containing fuel.

In the inventive example (valve seat insert No. 17) in which the pores were subjected to the resin impregnation treatment, the radial crushing strength was improved and the wear resistance was improved as compared with the conventional example (valve seat insert No. 1). The inventive example (valve seat insert No. 17) in which the pores were subjected to the resin impregnation treatment exhibits the same radial crushing strength and wear resistance as those of the inventive example (valve seat insert No. 6) without the resin impregnation treatment. According to the sealing by the resin impregnation treatment, improvement in corrosion resistance can be expected without accompanying a decrease in radial crushing strength and a decrease in wear resistance.

### Reference Signs List

- 1: Valve seat insert
- 2: Cylinder block equivalent material
- 3: Heating means
- 4: Valve

## Claims

1. A valve seat insert made of an iron-based sintered alloy for an internal combustion engine, the valve seat insert being press-fitted into a cylinder head of an internal combustion engine, the valve seat insert comprising a single-layer structure including a valve contacting face material, wherein
the valve contacting face material has a base matrix phase composed of a fine carbide precipitation phase, and a structure in which 5.0 to 30.0% of a high-alloy phase, 10.0 to 40.0% of hard particles, and 0 to 4.0% of solid lubricant particles are dispersed in the base matrix phase in terms of area ratio,
the hard particles are Si-Cr-Mo-Ni type Fe-based intermetallic compound particles having a hardness of 700 to 1300 HV in Vickers hardness and having a composition containing, by mass%, Si: 1.5 to 3.5%, Cr: 7.0 to 9.0%, Mo: 35.0 to 45.0%, and Ni: 5.0 to 20.0% with the balance being Fe and unavoidable impurities,
a base matrix part including the base matrix phase, the high-alloy phase, the hard particles, and the solid lubricant particles is made of an iron-based sintered alloy material having a base matrix part composition containing, by mass%, C: 0.50 to 2.80% and further containing one or two or more selected from Si: 1.80% or less, Mn: 2.50% or less, Cr: 2.00 to 7.00%, Mo: 3.00 to 25.00%, Ni: 2.00 to 8.00%, Co: 0 to 10.00%, V: 0.50 to 4.00%, and W: 4.00 to 10.00%, and S: 0 to 2.00% with the balance being Fe and unavoidable impurities, and
a density of the valve seat insert is 6.6 to 7.4 g/cm³.

2. A valve seat insert made of an iron-based sintered alloy for an internal combustion engine, the valve seat insert being press-fitted into a cylinder head of an internal combustion engine, the valve seat insert comprising a two-layer structure in which a valve contacting face material and a supporting material are integrally sintered, wherein
the valve contacting face material has a base matrix phase composed of a fine carbide precipitation phase, and a structure in which 5.0 to 30.0% of a high-alloy phase, 10.0 to 40.0% of hard particles, and 0 to 4.0% of solid lubricant particles are dispersed in the base matrix phase in terms of area ratio,
the hard particles dispersed in the valve contacting face material are Si-Cr-Mo-Ni type Fe-based intermetallic compound particles having a hardness of 700 to 1300 HV in Vickers hardness and having a composition containing, by mass%, Si: 1.5 to 3.5%, Cr: 7.0 to 9.0%, Mo: 35.0 to 45.0%, and Ni: 5.0 to 20.0% with the balance being Fe and unavoidable impurities,
a base matrix part including the base matrix phase, the high-alloy phase, the hard particles, and the solid lubricant particles is made of an iron-based sintered alloy material having a base matrix part composition containing, by mass%, C: 0.50 to 2.80% and further containing one or two or more selected from Si: 1.80% or less, Mn: 2.50% or less, Cr: 2.00 to 7.00%, Mo: 3.00 to 25.00%, Ni: 2.00 to 8.00%, Co: 0 to 10.00%, V: 0.50 to 4.00%, and W: 4.00 to 10.00%, and S: 0 to 2.00% with the balance being Fe and unavoidable impurities,
the supporting material is made of an iron-based sintered alloy material having a base matrix phase, a structure in which 0 to 4.0% of solid lubricant particles in terms of area ratio and 0 to 5.0% of hardness improving particles in terms of area ratio are dispersed in the base matrix phase, and a composition in which a base matrix part including the base matrix phase, the solid lubricant particles, and the hardness improving particles contains, by mass%, C: 0.30 to 2.00%, and further contains Ni: 0 to 2.00%, Mo: 0 to 2.00%, Cu: 0 to 5.00%, Mn: 0 to 5.00%, and S: 0 to 2.00% with the balance being Fe and unavoidable impurities, and
a density of the valve seat insert is 6.7 to 7.4 g/cm³.

3. The valve seat insert made of an iron-based sintered alloy for an internal combustion engine according to claim 1 or 2, wherein the fine carbide precipitation phase is a phase in which a fine carbide having a particle size of 10 µm or less is precipitated and which has a hardness of 450 to 650 HV in Vickers hardness.

4. The valve seat insert made of an iron-based sintered alloy for an internal combustion engine according to any one of claims 1 to 3, wherein the solid lubricant particles are one or two selected from manganese sulfide MnS and molybdenum disulfide MoS₂.

5. The valve seat insert made of an iron-based sintered alloy according to any one of claims 2 to 4, wherein the hardness improving particles are iron-molybdenum alloy particles.

6. The valve seat insert made of an iron-based sintered alloy for an internal combustion engine according to any one of claims 1 to 5, wherein pores of the iron-based sintered alloy material are impregnated with a thermosetting resin or an anaerobic resin.

7. A method for producing the valve seat insert made of an iron-based sintered alloy with a single-layer structure according to claim 1, the method comprising:
in production of a valve seat insert having a predetermined shape by blending, mixing, and kneading predetermined amounts of an iron-based powder, a graphite powder, an alloy element powder, and a hard particle powder, or further a solid lubricant powder to form a mixed powder,
filling a die having a predetermined shape with the mixed powder and performing press working to form a green compact, and
subjecting the green compact to a sintering treatment in a protective atmosphere to obtain a sintered body and then subjecting the sintered body to cutting machining or further grinding,
blending 40.0 to 70.0% of the iron-based powder with respect to the total amount of the mixed powder by mass%, the iron-based powder being an iron-based powder having a composition containing, by mass%, C: 0.2 to 0.8%, Si: 1.0% or less, Mn: 1.0% or less, Cr: 7.0% or less, Mo: 7.0% or less, V: 5.0% or less, W: 12.0% or less, or further contains Co: 12.0% or less with the balance being Fe and unavoidable impurities, and having a particle hardness of 170 to 280 HV in Vickers hardness;
blending 10.0 to 40.0% of the hard particle powder with respect to the total amount of the mixed powder by mass%, the hard particle powder being Si-Cr-Mo-Ni type Fe-based intermetallic compound particles having a hardness of 700 to 1300 HV in Vickers hardness and having a composition containing, by mass%, Si: 1.5 to 3.5%, Cr: 7.0 to 9.0%, Mo: 35.0 to 45.0%, Ni: 5.0 to 20.0% with the balance being Fe and unavoidable impurities;
blending 0.5 to 2.0% of the graphite powder with respect to the total amount of the mixed powder by mass%;
blending 0 to 7.0% of the alloy element powder with respect to the total amount of the mixed powder in total by mass%;
further blending 0 to 4.0% of the solid lubricant powder with respect to the total amount of the mixed powder by mass%;
performing the press working such that a density of the green compact is a density of 6.6 g/cm³ or more; and
performing the sintering treatment at a sintering temperature of 1100 to 1200°C to obtain the sintered body.

8. A method for producing the valve seat insert made of an iron-based sintered alloy with a two-layer structure according to claim 2, the method comprising:
in production of a valve seat insert with a two-layer structure having a predetermined shape by blending, mixing, and kneading predetermined amounts of an iron-based powder, a graphite powder, an alloy element powder, and a hard particle powder, or further a solid lubricant powder to form a mixed powder for a valve contacting face material,
blending, mixing, and kneading predetermined amounts of an iron-based powder and a graphite powder, or further an alloy element powder, hardness improving particles, and a solid lubricant powder to form a mixed powder for a supporting material, and
filling a die having a predetermined shape with the mixed powder for a valve contacting face material and the mixed powder for a supporting material in this order, performing press working to form a green compact, then subjecting the green compact to a sintering treatment in a protective atmosphere to form a sintered body with a two-layer structure in which a valve contacting face material and a supporting material are integrally sintered, and performing cutting machining or further grinding,
blending, in the mixed powder for a valve contacting face material, 40.0 to 70.0% of the iron-based powder with respect to the total amount of the mixed powder by mass%, the iron-based powder being an iron-based powder having a composition containing, by mass%, C: 0.2 to 0.8%, Si: 1.0% or less, Mn: 1.0% or less, Cr: 7.0% or less, Mo: 7.0% or less, V: 5.0% or less, and W: 12.0% or less, or further contains Co: 12.0% or less with the balance being Fe and unavoidable impurities, and having a particle hardness of 170 to 280 HV in Vickers hardness;
blending 10.0 to 40.0% of the hard particle powder with respect to the total amount of the mixed powder by mass%, the hard particle powder being Si-Cr-Mo type Fe-based intermetallic compound particles having a composition containing, by mass%, Si: 1.5 to 3.5%, Cr: 7.0 to 9.0%, and Mo: 35.0 to 45.0% with the balance being Fe and unavoidable impurities or Si-Cr-Mo-Ni type Fe-based intermetallic compound particles containing, by mass%, Si: 1.5 to 3.5%, Cr: 7.0 to 9.0%, Mo: 35.0 to 45.0%, and Ni: 5.0 to 20.0% with the balance being Fe and unavoidable impurities, the intermetallic compound particles having a hardness of 700 to 1300 HV in Vickers hardness;
blending 0.5 to 2.0% of the graphite powder with respect to the total amount of the mixed powder by mass%;
blending 0 to 7.0% of the alloy element powder with respect to the total amount of the mixed powder in total by mass%, and further blending 0 to 4.0% of the solid lubricant powder with respect to the total amount of the mixed powder by mass%;
blending, in the mixed powder for a supporting material, 0.5 to 2.0% of the graphite powder with respect to the total amount of the mixed powder for a supporting material by mass%, the iron-based powder being a pure iron powder;
blending 0 to 5.0% of the alloy element powder with respect to the total amount of the mixed powder for a supporting material in total by mass%;
blending 0 to 5.0% of the hardness improving particle powder with respect to the total amount of the mixed powder for a supporting material by mass%, the hardness improving particle powder being an iron-molybdenum alloy powder;
blending 0 to 4.0% of the solid lubricant powder with respect to the total amount of the mixed powder for a supporting material by mass%;
performing the press working such that a density of the green compact is a density of 6.6 g/cm³ or more; and
performing the sintering treatment at a sintering temperature of 1100 to 1200°C to obtain a sintered body with a two-layer structure in which the valve contacting face material and the supporting material are integrally sintered.

9. The method for producing the valve seat insert made of an iron-based sintered alloy according to claim 7 or 8, wherein a resin impregnation treatment of impregnating with a thermosetting resin or an anaerobic resin is further performed after the sintering treatment.
